# NEW EUROPEAN PATENT SPECIFICATION

(11) **EP 0 412 548 B2**
(45) Date of publication and mention of the opposition decision: **19.12.2001**
(45) Mention of the grant of the patent: 11.11.1998
(21) Application number: 90115322.1
(22) Date of filing: 09.08.1990
(51) Int. Cl.: C09D 11/00, B41J 2/02

(54) **Image recording ink composition and method of using same**
Aufzeichnungstinten-Zusammensetzung und Verfahren zur Verwendung derselben
Composition d'encre pour l'enregistrement d'images et son procédé d'utilisation

(30) Priority: 09.08.1989 JP 20655189; 11.08.1989 JP 20886389; 23.07.1990 JP 19424090
(43) Date of publication of application: 13.02.1991
(73) Proprietor: SEIKO EPSON CORPORATION, Shinjuku-ku Tokyo-to (JP)
(72) Inventor: Ohnishi, Hiroyuki, c/o Seiko Epson Corporation, Suwa-shi, Nagano (JP)
(74) Representative: Diehl, Hermann O. Th., Dr.

(56) References cited:
- EP-A- 232 066
- JP-A- 4 627 542
- JP-A- 49 034 551
- JP-A- 55 018 412
- JP-A- 58 122 974
- US-A- 4 597 794
- US-A- 4 724 001
- US-A- 4 836 852
- US-A- 5 430 192
- Römpp Chemie Lexikon, 7th ed., 1973, 1938, 1821-1827
- Römpp Chemie Lexikon, 9th ed., 1995, 2183, 1668, 4898
- Japanese Article 11892, Asahi Glass Company, "Best Choice Asahiklin"
- Adelite Brochure
- S. Ishikawa et al, Prog. in Org. Coatings, 15, 1988, 373-87

## Description

The present invention relates to an image recording ink composition and a method of using same.

In the field of ink jet recording, water-based inks have been mostly used from the viewpoint of odor and safety. Currently employed water-based inks are solution type inks prepared by dissolving various water-soluble dyes in water or a mixed solvent of water and a water-soluble organic solvent and, if desired, by adding various additives to the solution. An ink jet recording system using these inks has many excellent features including: (1) the recording process is easy in nature of direct recording; (2) the recording process is silent; (3) color recording is easily achieved; (4) high-speed recording is feasible; (5) special paper is not required such that the operating cost is low; and (6) ink is jetted in the form of fine droplets such that an image can be formed with a high resolving power. Because of these advantages, ink jet recording technology is being considered for future recording systems.

However, conventional ink jet recording techniques are disadvantageous in that (1) the ink easily runs on paper (blurring) to deteriorate image quality; (2) the rate of ink drying is low which results in smearing or tailing of the ink on non-image areas (ink stain); (3) the fixing property of the ink is poor; (4) the nozzles and ink passageways tend to become obstructed; (5) the image density is low; and (6) the water resistance is poor.

In order to alleviate these disadvantages, it has been proposed to add a specific surface active agent to an ink composition to thereby reduce the surface tension of the ink and to increase absorption of the ink into the paper as disclosed in document JP-A-55-29546 (the term "JP-A" as used herein means an "unexamined published Japanese patent application"). Furthermore, document US-A-4,352,691 proposes the use of a strongly basic substance to obtain an ink composition having a high pH value which, when transferred onto paper, chemically dissolves a sizing agent added as a waterproofing agent or a pulp to thereby control spread and absorption of ink dots in paper. Document JP-A-58-13675 teaches the addition of polyvinylpyrrolidone having a molecular weight of 40,000 or more to an ink composition to control spread of dots and absorption in paper. These proposals, however, did not provide a complete solution to the above-described problems.

Document EP-A-0 232 066 discloses a heterophase ink composition which comprises a water-insoluble polymer dispersed in a liquid medium, the polymer containing therein an oil-soluble dye as a coloring material, and a nonionic stabilizer permanently attached thereto. A process for the preparation of particles for ink jet printing comprises, among various other steps, the addition of a dye solution to the polymer. The dyes diffuse through a solvent medium into the polymer particles. The effectiveness and completion of this diffusion process is dependent on a number of factors including the concentration of the dyes, solvent and polymer particles, the specific types of dyes used, the nature of the particles being treated and the temperature at which the process is accomplished.

Further, document US-A-4,597,794 discloses a method for preparing a pigment type ink having a dispersion medium for pigment particles. The dispersion medium contains a polymer as dispersing agent having both a hydrophilic and hydrophobic construction portion and an aqueous liquid. In this polymer, the ratio of monomer unit constituting hydrophilic construction portion is a matter of great importance and the molecular weight of the dispersing agent has to be carefully adjusted to yield a suitable ink composition.

It is an object of the present invention to provide an ink composition for image formation which provides an image with sharp outlines free from blurring and having a high density and a high gloss on a variety of printing materials including fine paper, bond paper, PPC paper, OHP paper and recycled paper. This object is solved by the image recording ink composition of independent claims 1 and 25 and the method of independent claim 20. Further advantageous features are evident from the dependent claims, the following description, the drawing and the examples.

The present invention provides an ink composition or image formation which is rapidly dried and fixed to thereby prevent staining and to achieve full color recording through high-speed printing and overprinting of process colors.

The present invention further provides an ink composition for image formation having excellent jetting stability and excellent preservability, and which does not cause obstruction of nozzles and the ink passageway

The present invention additionally provides an ink composition for image formation which forms an image having excellent resistance to water add light.

The ink composition according to the invention is liquid and suitable for use in an image recording printer.

The present invention provides an ink composition for image formation for use in a printer for recording letters and images with a liquid ink, comprising water and a coloring material and containing at least one water-insoluble component.

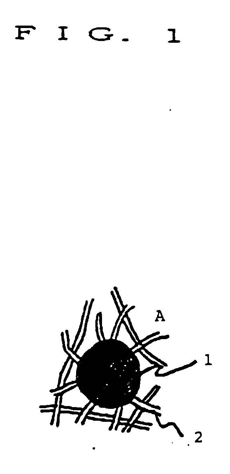

Fig. 1 schematically illustrates a dot of an ink composition of the present invention formed on a printed material. In Fig. 1, printed material A comprises fibers 2 and has formed thereon an ink dot having outline 1.

The ink composition of the present invention comprises water and a coloring material and contains at least one water-insoluble component.

Coloring materials for use in the present invention include conventional water-soluble dyes, oil-soluble dyes and dispersed dyes, as long as the coloring material does not undergo change in hue or precipitate on addition of other ink components.

Specific examples of the water-soluble dyes include C.I. Direct Yellow 1, 8, 11, 12, 24, 26, 27, 28, 33, 39, 44, 50, 58, 85, 86, 87, 88, 89 and 98; C.I. Acid Yellow 1, 3, 7, 11, 17, 19, 23, 25, 29, 38, 44, 79, 127 and 144; C.I. Basic Yellow 1, 2, 11 and 34; C.I. Direct Red 1, 2. 4, 9, 11, 13, 17, 20, 23, 24, 23, 31, 33, 37, 39, 44, 46, 62, 63, 75, 79, 80, 81, 83, 84, 89, 95, 99, 113, 197, 201, 218, 220, 224, 225, 226, 227, 228, 229, 230 and 231; C.I. Acid Red 1, 6, 8, 9, 13, 14, 19, 26, 27, 35, 37, 42, 52, 82, 85, 87, 89, 92, 97, 106, 111, 114, 115, 118, 134, 158, 186, 249, 254 and 289; C.I. Basic Red 1, 2, 9, 12, 14, 17, 18 and 37; C.I. Direct Blue 1, 2, 6, 15, 22, 25, 41, 71, 76, 78, 86, 87, 90, 93, 163, 165 and 202; C.I. Acid Blue 1, 7, 9, 22, 23, 25, 29, 40, 41, 43, 45, 78, 80, 82, 92, 127 and 249; C.I. Basic Blue 1, 3, 5, 7, 9, 22, 24, 25, 25, 28 and 29; C.I. Direct Black 2, 7, 19, 22, 24, 26, 31, 32, 38, 51, 52, 56, 63, 71, 74, 75, 77, 108 and 154; C.I. Acid Black 1, 2, 7, 24, 26, 29, 31, 44, 48, 50, 52 and 94; and C.I. Basic Black 2 and 8.

Specific examples of oil-soluble dyes include C.I. Solvent Yellow 1, 2, 3, 4, 5, 6, 7, 8, 9, 10, 11, 12, 14, 15, 16, 17, 19, 21, 26, 27, 29, 30, 35, 39, 40, 46, 49, 50, 51, 56, 61, 80, 86, 87, 89 and 96; C.I. Solvent Red 1, 2, 3, 8, 16, 17, 18, 19, 20, 22, 23, 24, 25, 26, 27, 30, 49, 52, 59, 60, 63, 67, 68, 81, 82, 84, 100 and 121; C.I. Solvent Blue 2, 6, 11, 12, 15, 20, 25, 30, 31, 32, 35, 36, 55, 53, 71, 72 and 73; and C.I, Solvent Black 3, 5, 7, 10, 11, 12, 13, 22 and 23.

Specific examples of dispersed dyes include C.I. Disperse Yellow 1, 3, 4, 7, 8 and 31; C.I. Disperse Red 1, 4, 5, 7, 11 and 12; C.I. Disperse Blue 1, 3, 5, 6, 7 and 27; and C.I. Disperse Black 1, 2, 10, 26, 27 and 28.

A pigment can also be used as the coloring material of the present invention, and useful pigments include inorganic pigments (e.g., carbon black) and organic pigments (e.g., insoluble azo pigments, soluble azo pigments, phthalocyanine pigments, isoindolinone pigments, quinacridone pigments, perinone pigments and perylene pigments). Processed pigments obtained by treating the surface of pigment particles with resins (e.g., graft carbon) may also be used.

Specific examples of inorganic pigments include acidic carbon blacks (MA-100, #1000, MA-7, MA-8 and MA-11, manufactured by Mitsubishi Kasei Corporation; Raven 1255, 1250, 1060, 1035, 1040, 1020, 1000 and 760, manufactured by Columbian Carbon Japan Ltd.) and graft carbon (GPT-505P manufactured by Ryoyu Kogyo).

In order to improve dispersion stability of ink composition during storage and recorded image quality, the acidic carbon blacks are preferably used.

Specific examples of organic pigments include C.I. Pigment Yellow 1, 2, 3, 5, 12, 13, 14, 15, 17 and 83; C.I. Pigment Red 1, 2, 3, 4, 5, 7, 9, 12, 22, 23, 37, 38, 81 and 146; C.I. Pigment Blue 1, 2, 15, 16 and 17; and C.I. Pigment Black 1.

The colored particles or pigment particles are preferably pulverized to have a particle diameter of not more than 1.0 µm.

The coloring material is preferably used in an amount of from 1 to 16% by weight, more preferably from 1 to 10% by weight, particularly preferably from 1.5 to 6% by weight, based on the ink composition. If the amount is less than 1% by weight, it is difficult to obtain the desired hue and density. If the addition amount exceeds 16% by weight, the ink tends to cause obstruction or reduce the storage stability.

The dyes are preferably used in an amount of from 1 to 6% by weight based on the ink composition.

The pigments are preferably used in an amount of from 1 to 10% by weight, more preferably from 1.5 to 6% by weight, based on the ink composition.

When a dye is used as the coloring material, the dye is used together with the water-insoluble component. For example, the dye can be impregnated, chemically adsorbed or loaded into a water-insoluble polymer dispersion particle.

The water-insoluble polymer other than a coloring material for use as a water-insoluble component of the present invention includes homo- or copolymer resin emulsions which are selected from organic ultrafine particles having an internal three-dimentional cross-linked structure; and natural or synthetic wax emulsions, e.g., paraffin wax, microcrystalline wax, polyethylene wax, and carnauba wax. The organic ultrafine particles having an internal three-dimensional cross-linked structure are described, for example, in K. Ishii et. al.; Proc. ACS Div. PMSE, 52, 448 (1985), S. Ishikawa et. al.; Prog. in Org. Coatings. 15, 373 (1988), and K. Ishii et. al.; XIX, FATIPEC KONGRESS, vol. IV, p.187 (1988). With respect to the conventional resin emulsion, particles therein are fused with each other due to evaporation of water to form a film. However, the organic ultrafine particles having an internal three-dimensional cross-linked structure do not form a film due to a fusion, although they may be agglomerated, and an emulsion thereof can be re-dispersed. Accordingly, the emulsion of the organic ultrafine particles insures an effect of preventing obstruction of nozzles and the ink passageway without adding a large amount of humectant. Further, because a viscosity of the emulsion of the organic ultrafine particles increases due to evaporation of water, the emulsion improves the fixing properties of coloring material on printing paper and prevents running (blur).

These water-insoluble components other than coloring material can be prepared by, for example, pulverizing a polymer obtained by emulsion polymerization, suspension polymerization, dispersion polymerization or other polymerization processes.

The above described resin emulsion can be used as a water-insoluble colored emulsion by dying with a dye. Furthermore, the resin emulsion can be added as the water-insoluble component other than a coloring material.

The water-insoluble resin emulsion is preferably used in an amount of from 1 to 20% by weight calculated as a solid content, based on the ink composition.

The water-insoluble component is preferably used in an amount of from 2 to 30% by weight based on the ink composition.

The water-insoluble component preferably has a particle diameter of from 0.001 µm to 10 µm. If the particle diameter exceeds 10 µm, the water-insoluble component tends to precipitate.

The ink composition of the present invention necessarily contains water. Other solvents which may be used for preparing the ink composition of the present invention include water and water-soluble organic solvents, such as alkyl alcohols having from 1 to 4 carbon atoms, ketones or keto alcohols, ethers, polyalkylene glycols, alkylene glycols having from 2 to 6 carbon atoms in the alkylene moiety thereof, glycerin, lower alkyl ethers of polyhydric alcohols, N-methyl-2-pyrrolidone, and triethanolamine. The water for use in the present invention is ion-exchange treated water. Water-soluble organic solvents used to prepare the ink composition of the present invention may be removed by evaporation.

Water or the ion-exchanged water is preferably used in an amount of from 50 to 95% by weight, more preferably from 60 to 90% by weight, based on the ink composition.

The calcium ion and magnesium ion concentrations in the ion-exchanged water are preferably at most 5 ppm.

The ink composition of the present invention may contain a water-soluble resin in combination with the water-insoluble component in order to improve fixing properties, to adjust the viscosity and to improve drying properties. Examples of useful water-soluble resins include glue, gelatin, casein, albumin, gum arabic, alginic acid, methyl cellulose, carboxymethyl cellulose, polyethylene oxide, hydroxyethyl cellulose, polyvinyl alcohol, polyacrylic acid, polyvinyl ether, and polyvinylpyrrolidone.

The water-soluble resin is preferably used in an amount of from 0.01 to 10% by weight, more preferably from 0.1 to 5% by weight, based on the ink composition.

The ink composition of the present invention other than those wherein a water-soluble dye is dissolved in water may further comprise a penetrant in order to permeate a solvent of the ink composition alone into the printed material. Use of the penetrant retains the coloring material on the surface of the printed material to thereby impart faster drying properties. Examples of the penetrant for use in the present invention include alkali metal hydroxides (e.g., lithium hydroxide, sodium hydroxide and potassium hydroxide), various surface active agents, methyl alcohol, ethyl alcohol, n-propyl alcohol, iso-propyl alcohol, n-butyl alcohol, diethylene glycol monobutyl ether, triethylene glycol monomethyl ether, N-methyl-2-pyrrolidone, and 1,3-dimethyl-2-imidazolidinone.

The penetrant is preferably used in an amount of from 0.005 to 10% by weight, more preferably from 0.01 to 5% by weight, based on the ink composition.

If desired, the ink composition of the present invention may further contain various known additives for printing inks such as dispersing agents, viscosity modifiers, surface-tension modifiers, specific-resistance modifiers, pH adjustors, antifungal agents, chelating agents.

The ink composition of the present invention preferably has a viscosity of not more than 30 mPa·s in the vicinity of a jet nozzle at a working temperature of from 0° to 50°C, taking the stability of the ink supply to a recording head and the stability of jetting ink droplets in high-speed recording into consideration. To achieve a higher speed of recording, a viscosity of from 1.5 to 20 mPa·s is particularly preferred. The term "high-speed recording" means an ability of printing letters at a speed of 2 pages (letter size) per minute.

The ink composition of the present invention preferably has a surface tension of 40 dyne/cm or more. An ink composition having a surface tension of less than 40 dyne/cm tends to blur on paper having a low degree of sizing, to thereby reduce the printing resolution.

The contact angle of the ink composition of the present invention to a material to be transferred is preferably at least 60°, more preferably at least 72°.

Means for uniformly dispersing the coloring component into a dispersing medium include a method of utilizing the effect of an electric double layer at the interface of the coloring material and the dispersion medium, a method of utilizing the protective action of an adsorption layer formed by a surface active agent or a high molecular weight polymeric protective colloid, a method of chemically bonding a high molecular weight polymer having a reactive functional group soluble in the dispersing medium and the surface of a coloring component, and a method of chemically bonding a suitable coupling agent with the surface of a coloring component. Because water having a high polarity is used as a dispersion medium of the present invention, stable dispersability can be obtained.

In the preparation of the ink composition of the present invention, dispersion of the pigment can be carried out by using a pulverizer or a micro-atomizer, such as a ball mill, sand mill, attritor, roll mill, agitator mill, Henschel mixer, colloid mill, ultrasonic homogenizer, high pressure homogenizer, pearl mill, jet mill, angmill, a mechanofusion apparatus (manufactured by Hosokawa Micron), and a hybridization apparatus (manufactured by Nara Kikai Seisakusho).

If desired, the dispersion of the pigment is passed through a filter, which filtering may be carried out under reduced pressure, or under pressure to remove large particles, dust, contaminants, or the dispersion may be stirred or mixed to obtain a final ink composition.

In drying and fixing of the image recording ink of the present invention, a heat fixing means such as hot air, a heating roll, and infrared rays may be used, if desired.

The ink composition for image formation of the present invention can be used in a conventional on-demand type (so-called Kyser type and thermal ink jet type) ink jet system and in an ink mist system in which an ink mist is generated by ultrasonic wave. The ink composition of the present invention is also applicable to an ink jet system comprising a nozzle plate having a plurality of nozzles and a piezoelectric transducer which is fixed close to the nozzle plate, being soaked in the ink and constituting an independently driven oscillator, wherein an electrical voltage is applied to the piezoelectric transducer to impart a varied pressure to the ink inside the nozzle plate while insulating the part of the transducer in contact with the ink. As a result, the ink is jetted from the nozzles to achieve printing.

When a recording is carried out using the above-described recording system at a flying speed of at least 10 m/ sec and at an ink amount of at most 0.2 µg/dot, high-quality recording can be made, and rapid ink drying properties of a drying speed of at most 10 sec can be realized. Further, a recording method wherein one dot is composed of 2 to 4 microdots of at most 0.05 µg/dot is more preferred.

The present invention is now illustrated in greater detail with reference to the following Examples and Comparative Examples, but it should be understood that the present invention is not deemed to be limited thereto. All the percents are by weight unless otherwise indicated.

Physical properties of the ink compositions prepared in the Examples below were determined as follows.

### a) Viscosity:

The stationary viscosity at 20°C was measured with a Flude Spectrometer manufactured by Rheometrix Far East Co.

### b) Surface Tension:

The surface tension was measured with a tensiometer manufactured by Kyowa Kaimen Kagaku.

### c) Average Particle Size:

The average particle size was obtained from the particle size distribution as determined by an ξ-potentiometer of a laser light scattering system "ELS 800" manufactured by Ohtsuka Denshi K.K.

### d) Contact Angle:

The contact angle was measured with an automatic contact angle meter (CZ-A type) manufactured by Kyowa Kaimen Kagaku.

### EXAMPLE 1

| | |
|---|---|
| C.I. Solvent Black 23 | 3% |
| Methyl methacrylate | 11% |
| n-Butyl acrylate | 7% |
| Glycidyl methacrylate | 2% |
| Ion-exchanged water | 67.5% |
| Sodium dodecylsulfate | 1% |
| Potassium persulfate | 0.5% |
| Glycerin | 8% |

In a flask equipped with a temperature controller, a stirrer, an inlet for nitrogen, and a dropping funnel, the atmosphere of which had been displaced with nitrogen, were added the sodium dodecylsulfate and ion-exchanged water. After heating the solution to 70°C, a monomer mixture comprising the methyl methacrylate, n-butylacrylate, and glycidyl methacrylate was dropwise added thereto over 2 hours while dropwise adding the potassium persulfate over 3 hours.

After completion of the addition of the potassium persulfate, the temperature was elevated to 80°C. The mixture was stirred for 1 hour, followed by filtration through a filter having a pore size of 1.2 µm under reduced pressure to prepare a resin emulsion having an average particle size of 0.8 µm.

To the resulting resin emulsion was added a solution of the C.I. Solvent Black 23 dissolved in acetone, and the mixture was stirred for two hours. After the acetone was removed by evaporation, the glycerin was added to the resulting mixture followed by stirring for 30 minutes. The mixture was filtered through a filter having a pore size of 1.2 µm under reduced pressure to obtain a recording ink composition having a surface tension of 48 dyne/cm.

### EXAMPLE 2

The same procedure as in Example 1 was repeated except for adding, as a penetrant, 5% of methyl alcohol to the recording ink composition of Example 1 to obtain a recording ink composition having surface tension of 42 dyne/cm.

### EXAMPLE 3

| | |
|---|---|
| C.I. Direct Black 154 | 3% |
| Organic ultrafine particles (solid content: 25%) (Microgel manufactured by Nippon Paint K.K.) | 40% |
| Ion-exchanged water | 52% |
| Glycerin | 6% |

The C.I. Direct Black 154 was dissolved in the ion-exchanged water, and the organic ultrafine particles (solid content: 25%) and glycerin were added to the solution, followed by stirring in a stirring machine for 1 hour. The mixture was passed through a membrane filter having a pore size of 0.8 µm to prepare a recording ink composition having an average particle size of 0.03 µm and a surface tension of 45 dyne/cm.

### COMPARATIVE EXAMPLE 1 AND 2

For comparison, a commercially available ink for an on-demand ink jet printer (Comparative Example 1) and a commercially available ink for a bubble jet printer (Comparative Example 2) were used. The composition of each of the commercially available inks is shown below.

### Comoarative Example 1

| | |
|---|---|
| C.I. Direct Black 19 | 2% |
| Glycerin | 15% |
| Ion-exchanged water | 83% |
| Surface Tension | 48 dyne/cm |

### Comparative Example 2

| | |
|---|---|
| C.I. Direct Black 19 | 2% |
| Diethylene glycol | 10% |
| Ethanol | 5% |
| Ion-exchanged water | 83% |
| Surface Tension | 46 dyne/cm |

Viscosity, surface tension, and average particle size of each of the ink compositions of Examples 1 to 11 and Comparative Examples 1 and 2 are shown in Table 1 below.

In order to test printability of each of the recording ink compositions, letters or graphics were printed with the ink composition on (A) fine paper for general use, (B) bond paper, (C) PPC paper, (D) recycled paper, or (E) general OHP sheets by the use of a commercially available on-demand ink jet printer (HG-2500 manufactured by Seiko Epson Corporation) and a multihead produced for experimental use in the manner as disclosed, for example, in U.S. Patent 4,072,959 (jet orifice diameter: 30 µm; piezo-oscillator driving voltage: 40 V; driving frequency: 8 kHz). The resulting recorded image was evaluated according to the following rating system.

### 1) Blur:

The extent of blurring of the recorded image was observed both visually (naked eye) and microscopically (100X magnification and 400X magnification).
Excellent Dots were fixed on fibers without blurring along the fibers under microscopic inspection..
Good Slight blur was observed along the fibers under microscopic inspection, but was visually imperceptible.
Medium Slight blurring was observed visually.
Poor Considerable blurring was visually observed, and the image had a jaggy edge.

### 2) Rapid Drying Properties:

Ten seconds, 30 seconds and 60 seconds after recording, the recorded image was scratched with an edge of paper.
Excellent No stain was observed after 10 seconds.
Good No stain was observed after 30 seconds
Medium No stain was observed after 60 seconds
Poor Stain was observed after 90 seconds

### 3) Fixing Properties:

One hour after recording, the surface of the recorded image was repeatedly scratched back and forth with a clip under a load of 200 g/cm until a stain appeared.
Excellent No staining observed after 30 or more reciprocal scratches.
Good Staining first observed after 20 to 30 reciprocal scratches.
Poor Staining first observed prior to 20 reciprocal scratches.

### 4) Obstruction:

The ink composition was filled in the above-described ink jet printer and left to stand at 50°C for 1 month with no cap on the nozzle.
Good Printing could be conducted right from the without further preparation.
Medium Printing could be conducted after the ink was circulated for cleaning.
Poor Printing could not be conducted.

### 5) Ink Preservability:

The ink composition was sealed in a sample bottle and stored at 50°C for 6 months. Any change, such as the generation of foreign matter or offensive odor, or the formation of agglomerates or precipitates, was observed.
Excellent No change.
Good A precipitate was formed but was easily re-dispersed.
Poor A precipitate was formed and could not be re-dispersed.

### 6) Recording Density:

The reflective optical density (OD) of the recorded image was measured with a Macbeth densitometer (TR-927 type).

### 7) Water-Resistance:

A printed sheet 1 hour after printing was immersed in water for 5 minutes, and the printed sheet thus treated was evaluated for running of the ink.
Good No running was observed.
Poor Running was observed.

### 8) Gloss:

The specular gloss at an angle of 75° was measured with a digital glossmeter (manufactured by Murakami Shikisai Gijutsu Kenkyusho).
Good 80 or more
Medium 51 to 79
Poor 50 or less

### 9) Printability on OHP Paper:

Good Printable
Poor Unprintable

### 10) Light Resistance:

The recorded image was irradiated with the light of a xenon lamp (400 W) for 100 hours, with the distance between a sample and the lamp being 25 cm, and fading was determined using a blue scale in accordance with JIS L 0841.
Good At least fourth grade
Poor Less than fourth grade

The results of these evaluations are shown in Table 2 below.

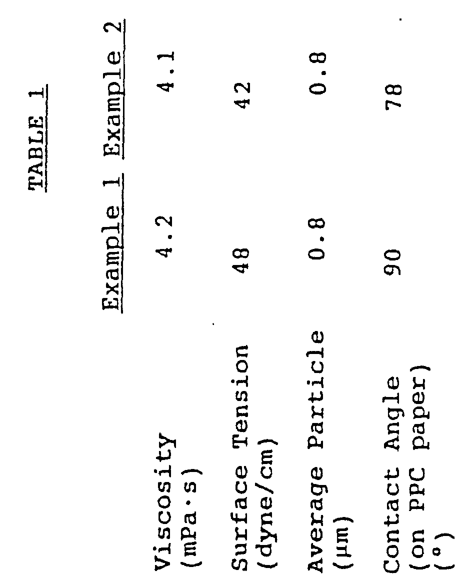

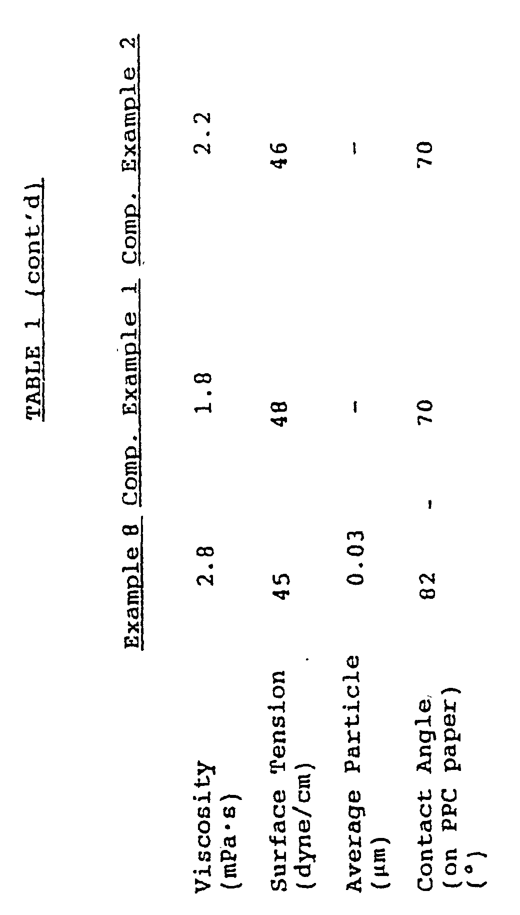

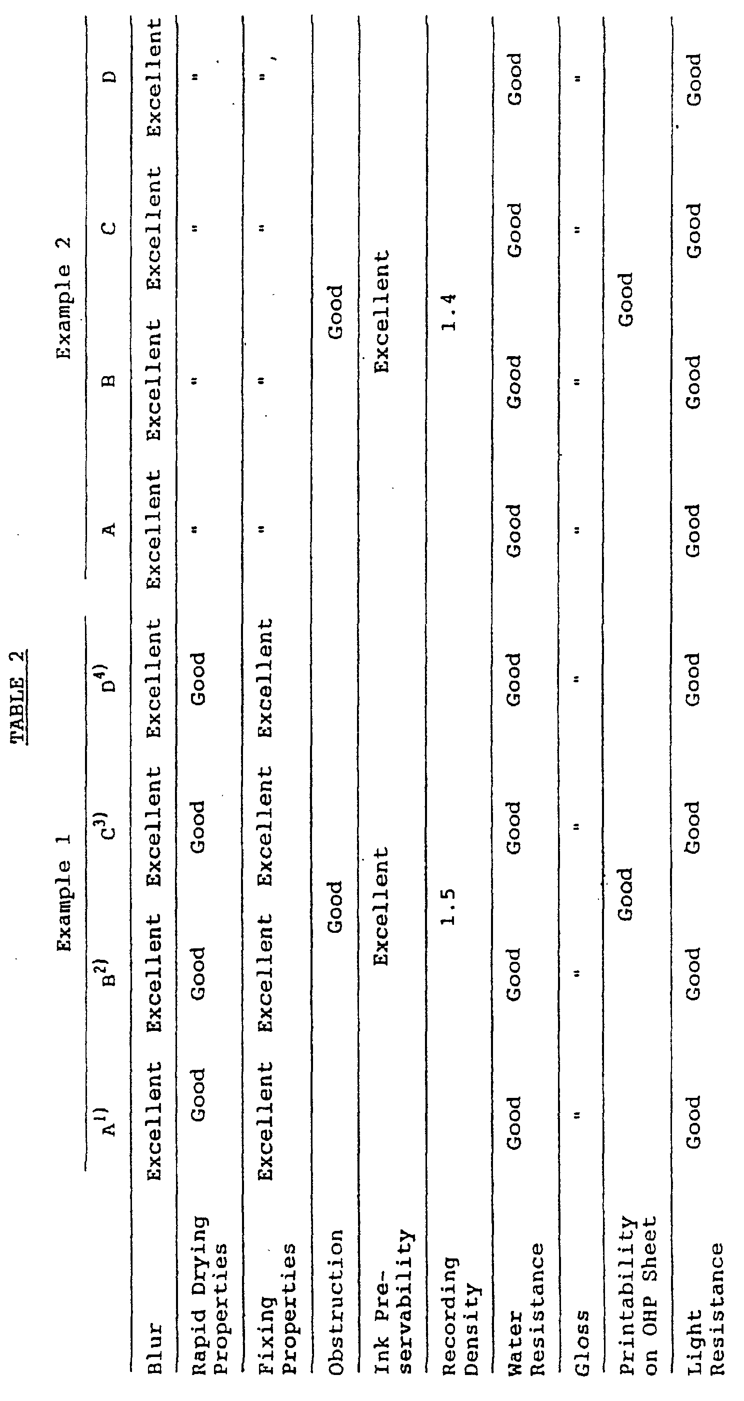

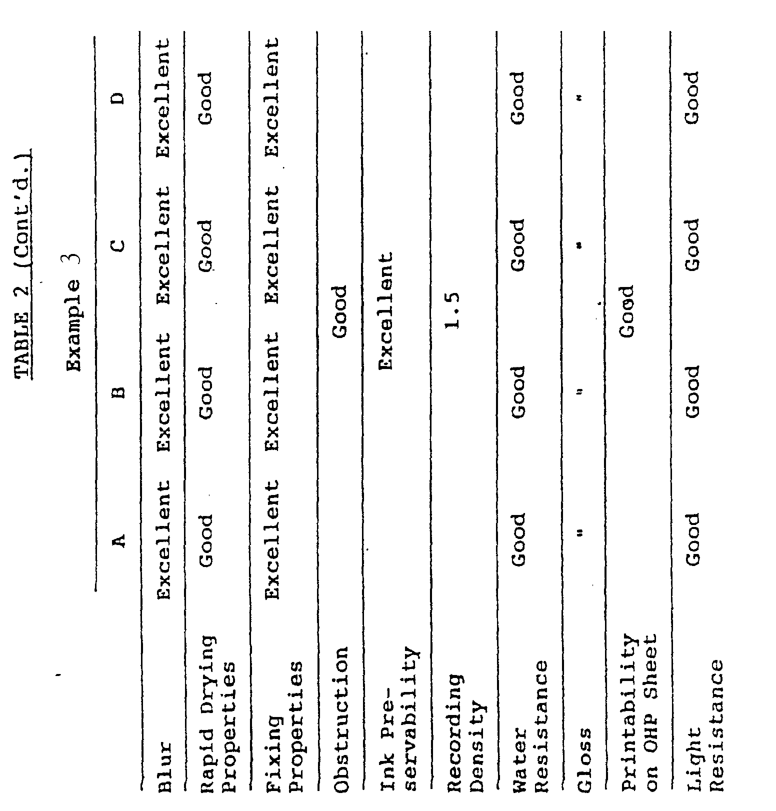

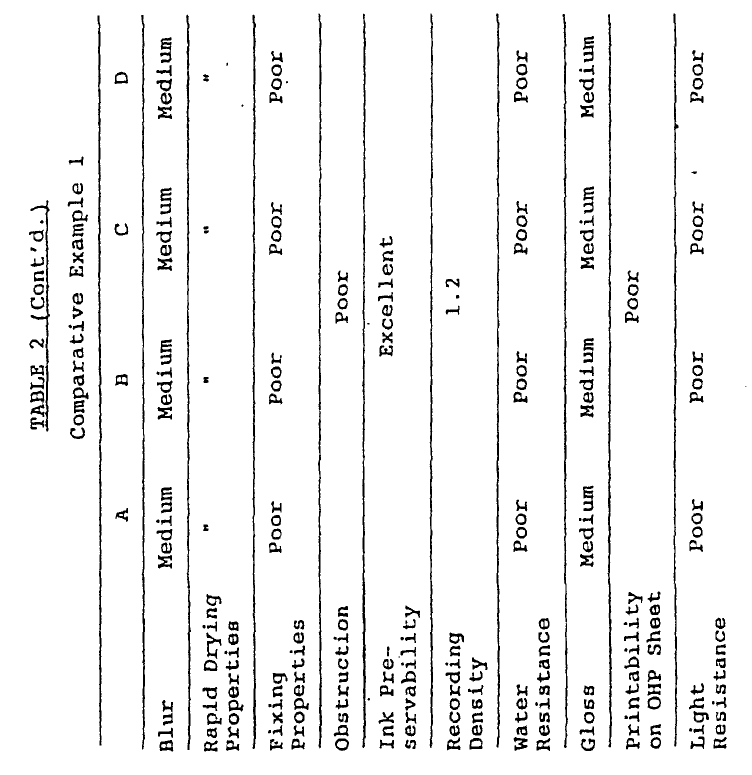

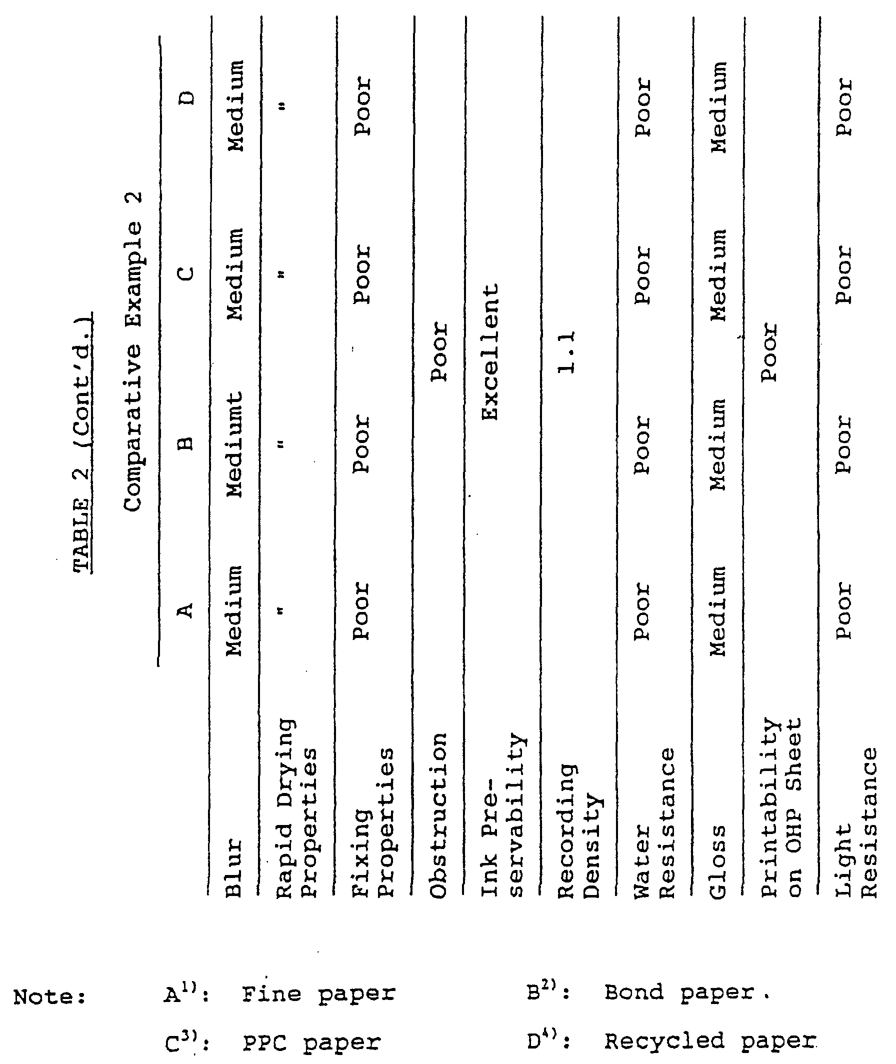

According to the above described Examples of the present invention, on printing, the coloring component of the ink composition of the present invention is adhered in place on the printing material by the cohesive force of the water-insoluble component, such that the ink is solidified and fixed to form dots having sharp outlines as shown in Fig. 1.

As described above, the ink composition of the present invention comprising water and a coloring material and containing at least one water-insoluble component to thereby obtain have a heterogeneous phase, exhibits satisfactory drying properties and fixing properties and provides a clear and high density recorded image having excellent resistance to water and light without causing running (blur). Also, the ink composition of the present invention does not cause obstruction in a printing machine and has excellent preservability.

Furthermore, the ink composition of the present invention is adaptable to high-speed and high-quality printing on general OHP paper, which has not hitherto been employable in a conventional ink jet recording system.

Also, the satisfactory drying and fixing properties of the ink composition of the present invention provides for multicolor printing to obtain a full color image having high resolution by using three process color inks.

In addition, the ink composition of the present invention can be used for printing on recycled paper which is expected to became readily available in the market.

## Claims

1. An image recording ink composition for use in a printer for recording letters and images with a liquid ink, comprising
a) water,
b) as a coloring material either
b1) a water-soluble dye,
b2) a dispersed dye or
b3) a pigment, and
c) at least one water-insoluble component selected from the group consisting of
c11) water-insoluble homo- or copolymer resin emulsions which are selected from organic ultrafine particles having an internal three-dimensional cross-linked structure, and
c3) natural or synthetic wax emulsions,
an image recording ink composition consisting of a combination of a water-insoluble polymer dispersion particle selected from monomers having a hydrophilic functional group and pigments being excluded.

2. The image recording ink composition as in claim 1, wherein said ink composition comprises water, a dye and a water insoluble resin emulsion.

3. The image recording ink composition as in claim 1 or 2, further comprising a penetrant, ink compositions including a water soluble dye being excluded.

4. The image recording ink composition as in one of the preceding claims, further comprising a water-soluble resin.

5. The image recording ink composition as in claim 1, wherein said ink composition comprises water and a colored water-insoluble resin emulsion.

6. The image recording ink composition as in one of the preceding claims, wherein said ink composition has a viscosity of not more than 30 mPa·s, preferably of from 1.5 to 20 mPa·s, at a temperature of from 0° to 50°C.

7. The image recording ink composition as in one of the preceding claims, wherein said ink composition has a surface tension of 0.0004 N/cm (40 dyne/cm) or more.

8. The image recording ink composition as in one of the preceding claims, wherein said ink composition constitutes a heterogeneous phase.

9. The image recording ink composition as in one of the preceding claims, wherein said coloring material has a particle diameter of not more than 1.0 µm.

10. The image recording ink composition as in one of the preceding claims, wherein said pigment is selected from carbon black, insoluble azo pigments, soluble azo pigments, phthalocyanine pigments, isoindolinone pigments, quinacridone pigments, perinone pigments and perylene pigments.

11. The image recording ink composition as in claim 10, wherein the carbon black is an acidic carbon black.

12. The image recording ink composition as in one of the preceding claims, wherein the ink composition contains water in the amount of 50 to 95% by weight, preferably in the amount of 60 to 90% by weight.

13. The image recording ink composition as in one of the preceding claims, wherein the ink composition contains the coloring material in the amount of 1 to 15% by weight, preferably in the amount of 1 to 10% by weight, and most preferably in the amount of 1.5 to 6% by weight.

14. The image recording ink composition as in one of the preceding claims, wherein the ink composition contains the water-insoluble component in the amount of 2 to 30% by weight.

15. The image recording ink composition as in one of the preceding claims, wherein the ink composition contains the dye in the amount of 1 to 5% by weight.

16. The image recording ink composition as in claim 3, wherein the ink composition contains the pigment in the amount of 1 to 10% by weight, preferably in the amount of 1.5 to 6% by weight.

17. The image recording ink composition as in claim 3 or one of the claims dependent on claim 3, wherein the ink composition contains the penetrant in the amount of 0.005 to 10% by weight, preferably in the amount of 0.01 to 5% by weight.

18. The image recording ink composition as in one of the preceding claims, wherein the ink composition contains the water-insoluble resin emulsion in the amount of 1 to 20% by weight calculated as a solid content.

19. The image recording ink composition as in claim 4 or one of the claims dependent of claim 4, wherein the ink composition contains the waler-soluble resin in the amount of 0.01 to 10% by weight, preferably in the amount of 0.1 to 5% by weight.

20. A method for recording letters and images using an ink composition comprising water and a coloring material and containing at least one water-insoluble component, according to one of the preceding claims, comprising jetting droplets of the ink composition onto a printing material.

21. The method for recording letters and images as in claim 20, wherein the contact angle of the ink composition to the printing material is at least 60°, preferably at least 72°.

22. An ink jet recording method, according to claim 20 or 21, comprising jetting an ink composition comprising water and a coloring material and containing at least one water-insoluble component according to one of claims 1 to 19 from nozzles at a flying speed of at least 10 m/sec and at an ink amount of at most 0.2 µg/dot.

23. An image recording ink composition according to claim 1 for use in a printer for recording letters and images with a liquid ink, comprising a pigment, a water-soluble resin and water.

24. The image recording ink composition as in claim 23, wherein said water-soluble resin is polyvinylpyrrolidone.

25. The image recording ink composition as in claim 23 or 24, further comprising a penetrant.

26. The image recording ink composition as in claim 25, wherein said penetrant is selected from alkali metalhydroxides, surface active agents, methyl alcohol, ethyl alcohol, n-propyl alcohol, iso-propyl alcohol, n-butyl alcohol, diethylene glycol monobutyl ether, triethylene glycol monomethyl ether, N-methyl-2-pyrrolidone and 1,3-dimethyl-2-imidazolidinone.

27. The image recording ink composition as in one of claims 23 to 26 further comprising a solvent.

28. The image recording ink composition as in claim 27 wherein said solvent is selected from alkyl alcohols having from 1 to 4 carbon atoms. ketones or keto alcohols, ethers, polyalkylene glycols, alkylene glycols having from 2 to 6 carbon atoms in the alkylene moiety thereof, glycerin, lower in the alkyl ethers of polyhydric alcohols. N-methyl-2-pyrrolidone and triethanolamine.

29. The image recording ink composition as in claim 23 to 28, further comprising a dispersing agent.

30. Use of a composition according to claim 1 comprising water and a coloring material and containing at least one water-insoluble component as an image recording ink composition.

## Patentansprüche

1. Bildaufzeichnungstintenzusammensetzung zur Verwendung in einem Drucker zur Aufzeichnung von Buchstaben und Bildern mit einer flüssigen Tinte, umfassend
a) Wasser,
b) als Färbematerial entweder
b1) einen wasserlöslichen Farbstoff,
b2) einen Dispersionsfarbstoff oder
b3) ein Pigment, und
c) mindestens eine wasserunlösliche Komponente ausgewählt aus der Gruppe bestehend aus
c11) wasserunlöslichen Homo- oder Copolymerharzemulsionen, welche ausgewählt sind aus organischen, ultrafeinen Partikeln mit einer inneren dreidimensionalen vernetzten Struktur und
c3) natürlichen oder synthetischen Wachsemulsionen, wobei eine Bildaufzeichnungstintenzusammensetzung bestehend aus einer Kombination aus einem wasserunlöslichen Polymerdispersionspartikel, ausgewählt aus Monomeren mit einer hydrophilen funktionellen Gruppe, und aus Pigmenten ausgeschlossen ist.

2. Bildaufzeichnungstintenzusammensetzung gemäß Anspruch 1, bei der die Tintenzusammensetzung Wasser, einen Farbstoff und eine wasserunlösliche Harzemulsion enthält.

3. Bildaufzeichnungstintenzusammensetzung gemäß Anspruch 1 oder 2, die des weiteren ein Eindringmedium enthält, Tintenzusammensetzungen mit einem wasserlöslichen Farbstoff ausgeschlossen.

4. Bildaufzeichnungstintenzusammensetzung gemäß einem der vorhergehenden Ansprüche, die des weiteren ein wasserlösliches Harz enthält.

5. Bildaufzeichnungstintenzusammensetzung gemäß Anspruch 1, bei der die Tintenzusammensetzung Wasser und eine farbige wasserunlösliche Harzemulsion enthält.

6. Bildaufzeichnungstintenzusammensetzung gemäß einem der vorhergehenden Ansprüche, bei der die Tintenzusammensetzung eine Viskosität von nicht mehr als 30 mPa·s, vorzugsweise von 1,5 bis 20 mPa·s, bei einer Temperatur von 0° bis 50°C aufweist.

7. Bildaufzeichnungstintenzusammensetzung gemäß einem der vorhergehenden Ansprüche, bei der die Tintenzusammensetzung eine Oberflächenspannung von 0,0004 N/cm (40 Dyn/cm) oder mehr aufweist.

8. Bildaufzeichnungstintenzusammensetzung gemäß einem der vorhergehenden Ansprüche, bei der die Tintenzusammensetzung eine heterogene Phase darstellt.

9. Bildaufzeichnungstintenzusammensetzung gemäß einem der vorhergehenden Ansprüche, bei der das Färbematerial einen Partikeldurchmesser von nicht mehr als 1,0 µm aufweist.

10. Bildaufzeichnungstintenzusammensetzung gemäß einem der vorhergehenden Ansprüche, bei der das Pigment ausgewählt ist aus Kohleschwarz, unlöslichen Azopigmenten, löslichen Azopigmenten, Phthalocyaninpigmenten, Isoindolinonpigmenten, Chinacridonpigmenten, Perinonpigmenten und Perylenpigmenten.

11. Bildaufzeichnungstintenzusammensetzung gemäß Anspruch 10, bei der das Kohleschwarz ein saures Kohleschwarz ist.

12. Bildaufzeichnungstintenzusammensetzung gemäß einem der vorhergehenden Ansprüche, bei der die Tintenzusammensetzung Wasser in der Menge von 50 bis 95 Gew.%, vorzugsweise in der Menge von 60 bis 90 Gew.%, enthält.

13. Bildaufzeichnungstintenzusammensetzung gemäß einem der vorhergehenden Ansprüche, bei der die Tintenzusammensetzung das Färbematerial in der Menge von 1 bis 16 Gew.%, vorzugsweise in der Menge von 1 bis 10 Gew.%, und am bevorzugtesten in der Menge von 1,5 bis 6 Gew.%, enthält.

14. Bildaufzeichnungstintenzusammensetzung gemäß einem der vorhergehenden Ansprüche, bei der die Tintenzusammensetzung die wasserunlösliche Komponente in der Menge von 2 bis 30 Gew.% enthält.

15. Bildaufzeichnungstintenzusammensetzung gemäß einem der vorhergehenden Ansprüche, bei der die Tintenzusammensetzung den Farbstoff in der Menge von 1 bis 6 Gew.% enthält.

16. Bildaufzeichnungstintenzusammensetzung gemäß Anspruch 3, bei der die Tintenzusammensetzung das Pigment in der Menge von 1 bis 10 Gew.%, vorzugsweise in der Menge von 1,5 bis 6 Gew.%, enthält.

17. Bildaufzeichnungstintenzusammensetzung gemäß Anspruch 3 oder einem der von Anspruch 3 abhänigen Ansprüche, bei der die Tintenzusammensetzung das Eindringmedium in der Menge von 0,005 bis 10 Gew.%, vorzugsweise in der Menge von 0,01 bis 5 Gew.%, enthält.

18. Bildaufzeichnungstintenzusammensetzung gemäß einem der vorhergehenden Ansprüche, bei der die Tintenzusammensetzung die wasserunlösliche Harzemulsion in der Menge von 1 bis 20 Gew.%, berechnet als Festgehalt, enthält.

19. Bildaufzeichnungstintenzusammensetzung gemäß Anspruch 4 oder einem der von Anspruch 4 abhängigen Ansprüche, bei der die Tintenzusammensetzung das wasserlösliche Harz in der Menge von 0,01 bis 10 Gew.%, vorzugsweise in der Menge von 0,1 bis 5 Gew.%, enthält.

20. Verfahren zur Aufzeichnung von Buchstaben und Bildern unter Verwendung einer Tintenzusammensetzung mit Wasser und einem Färbematerial und mit mindestens einer wasserunlöslichen Komponente, gemäß einem der vorhergehenden Ansprüche, umfassend das Ausstoßen von Tröpfchen der Tintenzusammensetzung auf ein Druckmaterial.

21. Verfahren zur Aufzeichnung von Buchstaben und Bildern gemäß Anspruch 20, wobei der Kontaktwinkel der Tintenzusammensetzung zum Druckmaterial mindestens 60°, vorzugsweise mindestens 72° ist.

22. Tintenstrahlaufzeichnungsverfahren gemäß Anspruch 20 oder 21 mit dem Ausstoßen einer Tintenzusammensetzung mit Wasser und einem Färbematerial und mit mindestens einer wasserunlöslichen Komponente gemäß einem der Ansprüche 1 bis 19 aus Düsen mit einer Fluggeschwindigkeit von mindestens 10 m/Sek. und einer Tintenmenge von höchstens 0,2 µg/Punkt.

23. Bildaufzeichnungstintenzusammensetzung gemäß Anspruch 1 zur Verwendung in einem Drucker zur Aufzeichnung von Buchstaben und Bildern mit flüssiger Tinte mit einem Pigment, einem wasserlöslichen Harz und Wasser.

24. Bildaufzeichnungstintenzusammensetzung gemäß Anspruch 23, bei der das wasserlösliche Harz Polyvinylpyrrolidon ist.

25. Bildaufzeichnungstintenzusammensetzung gemäß Anspruch 23 oder 24, die des weiteren ein Eindringmedium enthält.

26. Bildaufzeichnungstintenzusammensetzung gemäß Anspruch 25, bei der das Eindringmedium ausgewählt ist aus Alkalimetallhydroxiden, oberflächenaktiven Mitteln, Methylalkohol, Ethylalkohol, N-Propylalkohol, Iso-Propylalkohol, N-Butylalkohol, Diethylenglykolmonobutylether, Triethylenglykolmonomethylether, N-Methyl-2-Pyrrolidon und 1,3-Dimethyl-2-imidazolidinon.

27. Bildaufzeichnungstintenzusammensetzung gemäß einem der Ansprüche 23 bis 26, die des weiteren ein Lösemittel enthält.

28. Bildaufzeichnungstintenzusammensetzung gemäß Anspruch 27, bei der das Lösemittel ausgewählt ist aus Alkylalkoholen mit 1 bis 4 Kohlenstoffatomen, Ketonen oder Ketoalkoholen, Ethern, Polyalkylenglykolen, Alkylenglykolen mit 2 bis 6 Kohlenstoffatomen im Alkylenanteil hiervon, Glycerin, Niederalkylethern von Polyalkoholen, N-Methyl-2-Pyrrolidon und Triethanolamin.

29. Bildaufzeichnungstintenzusammensetzung gemäß Anspruch 23 bis 28, die des weiteren ein Dispersionsmittel umfaßt.

30. Verwendung einer Zusammensetzung gemäß Anspruch 1 mit Wasser und einem Färbematerial und mit mindestens einer wasserunlöslichen Komponente als Bildaufzeichnungstintenzusammensetzung.

## Revendications

1. Composition d'encre pour l'enregistrement d'images pour être utilisée dans une imprimante pour enregistrer des lettres et des images avec une encre liquide, comprenant
a) de l'eau,
b) comme matière colorante,
b1) un colorant soluble dans l'eau,
b2) un colorant dispersé, ou
b3) un pigment, et
c) au moins un composant insoluble dans l'eau choisi dans le groupe constitué par
c11) des émulsions de résine homo- ou co-polymère Insoluble dans l'eau qui sont choisies parmi des particules ultra-fines organiques ayant une structure interne réticulée tridimensionnelle et
c3) des émulsions de cire naturelle ou synthétique,
une composition d'encre pour l'enregistrement d'images consistant en une combinaison d'une dispersion de polymère insoluble dans l'eau, d'une particule choisie parmi les monomères ayant un groupe fonctionnel hydrophile et des pigments étant exclue.

2. Composition d'encre pour l'enregistrement d'images selon la revendication 1, **caractérisée en ce que** ladite composition d'encre comprend de l'eau, un colorant et une émulsion de résine insoluble dans l'eau.

3. Composition d'encre pour l'enregistrement d'images selon la revendication 1 ou 2, **caractérisée en ce qu'**elle comprend en outre un agent pénétrant, des compositions d'encre comprenant un colorant soluble dans l'eau étant exclues.

4. Composition d'encre pour l'enregistrement d'images selon l'une quelconque des revendications précédentes comprenant en outre une résine soluble dans l'eau.

5. Composition d'encre pour l'enregistrement d'images selon la revendication 1, **caractérisée en ce que** ladite composition d'encre comprend de l'eau et une émulsion colorée de résine insoluble dans l'eau.

6. Composition d'encre pour l'enregistrement d'images selon l'une quelconque des revendications précédentes, **caractérisée en ce que** ladite composition d'encre a une viscosité qui n'est pas supérieure à 30 mPa.s, de préférence de 1,5 à 20 mPa.s, à une température de 0°C à 50°C.

7. Composition d'encre pour l'enregistrement d'images selon l'une quelconque des revendications précédentes, **caractérisée en ce que** ladite composition d'encre a une tension superficielle de 0,0004 N/cm (40 dynes/cm) ou plus.

8. Composition d'encre pour l'enregistrement d'images selon l'une quelconque des revendications précédentes, **caractérisée en ce que** ladite composition d'encre constitue une phase hétérogène.

9. Composition d'encre pour l'enregistrement d'images selon l'une quelconque des revendications précédentes, **caractérisée en ce que** ladite matière colorante a une granulométrie qui n'est pas supérieure à 1,0 µm.

10. Composition d'encre pour l'enregistrement d'images selon l'une quelconque des revendications précédentes, **caractérisée en ce que** ledit pigment est choisi parmi le noir de carbone, des pigments azoïques insolubles, des pigments azoïques solubles, des pigments phtalocyanines, des pigments isoindolinones, des pigments quinacridones, des pigments perinones, et des pigments perylènes.

11. Composition d'encre pour l'enregistrement d'images selon la revendication 10, **caractérisée en ce que** le noir de carbone est du noir de carbone acide.

12. Composition d'encre pour l'enregistrement d'images selon l'une quelconque des revendications précédentes, **caractérisée en ce que** la composition d'encre contient de l'eau en une quantité de 50 à 95% en poids, de préférence en une quantité de 60 à 90% en poids.

13. Composition d'encre pour l'enregistrement d'images selon l'une quelconque des revendications précédentes, **caractérisée en ce que** la composition d'encre contient la matière colorante en une quantité de 1 à 16% en poids, de préférence en une quantité de 1 à 10% en poids, et plus préférentiellement en une quantité de 1,5 à 6% en poids.

14. Composition d'encre pour l'enregistrement d'images selon l'une quelconque des revendications précédentes, **caracterisée en ce que** la composition d'encre contient le composant insoluble dans l'eau en une quantité de 2 à 30% en poids.

15. Composition d'encre pour l'enregistrement d'images selon l'une quelconque des revendications précédentes, **caractérisée en ce que** la composition d'encre contient le colorant en une quantité de 1 à 6% en poids.

16. Composition d'encre pour l'enregistrement d'images selon la revendication 3, **caractérisée en ce que** la composition d'encre contient le pigment en une quantité de 1 à 10% en poids, de préférence, en une quantité de 1,5 à 6% en poids.

17. Composition d'encre pour l'enregistrement d'images selon la revendication 3 ou l'une quelconque des revendications dépendantes de la revendication 3, **caractérisée en ce que** la composition d'encre contient l'agent pénétrant en une quantité de 0,005 à 10% en poids, de préférence en une quantité de 0,01 à 5% en poids.

18. Composition d'encre pour l'enregistrement d'images selon l'une quelconque des revendications précédentes, **caractérisée en ce que** la composition d'encre contient rémulsion de résine insoluble dans l'eau en une quantité de 1 à 20% en poids calculée en teneur en solide.

19. Composition d'encre pour l'enregistrement d'images selon la revendication 4 ou l'une quelconque des revendications dépendantes de la revendication 4, **caractérisée en ce que** la composition d'encre contient la résine soluble dans l'eau en une quantité de 0,01 à 10% en poids, de préférence, en une quantité de 0,1 à 5% en poids.

20. Procédé pour l'enregistrement de lettres et d'images utilisant une composition d'encre comprenant de l'eau et une matière colorante et contenant au moins un composant insoluble dans l'eau, selon l'une quelconque des revendications précédentes, comprenant la projection de gouttelettes de la composition d'encre sur un matériau d'impression.

21. Procédé pour l'enregistrement de lettres et d'images selon la revendication 20, **caractérisé en ce que** l'angle de contact de la composition d'encre avec le matériau d'impression est d'au moins 60°, de préférence d'au moins 72°.

22. Procédé d'enregistrement par jet d'encre, selon la revendication 20 ou 21, comprenant la projection d'une composition d'encre comprenant de l'eau et une matière colorante et contenant au moins un composant insoluble dans l'eau selon l'une quelconque des revendications 1 à 19 par des buses à une vitesse d'éjection d'au moins 10 m/s et en une quantité d'encre au maximum de 0,2 µg/point.

23. Composition d'encre pour l'enregistrement d'images selon la revendication 1 pour l'utilisation dans une imprimante pour l'enregistrement de lettres et d'images avec une encre comprenant un pigment, une résine soluble dans l'eau et de l'eau.

24. Composition d'encre pour l'enregistrement d'images selon la revendication 23, **caractérisée en ce que** ladite résine soluble dans l'eau est la polyvinylpyrrolidone.

25. Composition d'encre pour l'enregistrement d'images selon revendication 23 ou 24, comprenant en outre un agent pénétrant.

26. Composition d'encre pour l'enregistrement d'images selon la revendication 25, **caractérisée en ce que** ledit agent pénétrant est choisi parmi les hydroxydes de métaux alcalins, les agents tensioactifs, l'alcool méthylique, l'alcool éthylique, l'alcool n-propylique, l'alcool iso-propylique, l'alcool n-bublique, l'éther monobutylique de diéthylèneglycol, l'éther monométhylique de triéthylèneglycol, la N-méthyl-2-pyrroline et la 1,3-diméthyl-2-imidazolidinone.

27. Composition d'encre pour l'enregistrement d'images selon l'une quelconque des revendications 23 à 26, comprenant en outre un solvant.

28. Composition d'encre pour l'enregistrement d'images selon la revendication 27, **caractérisée en ce que** ledit solvant est choisi parmi les alcools alkyliques ayant de 1 à 4 atomes de carbone, des cétones ou des cétoalcools, des éthers, des polyalkylèneglycols, des alkylèneglycols ayant de 2 à 6 atomes de carbone dans leur segment alkylène, la giycérine, les éthers alkyliques inférieurs d'alcools polyhydriques, la N-méthyl-2-pyrrolidone et la triéthanolamine.

29. Composition d'encre pour l'enregistrement d'images selon l'une quelconque des revendications 23 à 28, comprenant en outre un agent dispersant.

30. Utilisation d'une composition selon la revendication 1 comprenant de l'eau et une matière colorante et contenant au moins un composant insoluble dans l'eau comme composition d'encre pour l'enregistrement d'images.
